# EUROPEAN PATENT SPECIFICATION

(11) **EP 1 870 577 B1**
(45) Date of publication and mention of the grant of the patent: **24.12.2008**
(21) Application number: 06115897.8
(22) Date of filing: 22.06.2006
(51) Int. Cl.: F02B 27/00

(54) **Intake system**
Ansaugsystem
Système d'admission

(43) Date of publication of application: 26.12.2007
(73) Proprietor: Ford Global Technologies, LLC, Dearborn, MI 48126 (US)
(72) Inventor: BROMAND, Ramin, SE-413 13 Göteborg (SE)
(74) Representative: Valea AB

(56) References cited:
- EP-A- 0 705 965
- EP-A2- 1 277 934
- DE-A1- 3 530 607
- DE-A1- 4 231 804
- JP-A- 60 069 255
- JP-A- 60 169 627
- US-A- 4 760 819
- US-A- 5 031 598

## Description

### TECHNICAL FIELD

The present invention relates to intake systems of the type used in internal combustion engine having a plurality of cylinders.

The invention further relates to a method of method of supplying an internal combustion engine, having a plurality of cylinders and a plurality of possible engine speeds, with a fluid comprising either air or a mixture of fuel and air

### BACKGROUND OF THE INVENTION

An internal combustion engine is generally provided with either a fuel injection system or a carburetter system. In either case, each cylinder of the engine is provided with fuel and air; in the injection system, fuel and air are supplied separately; and in the carburetter system, a mixture of fuel and air is supplied to each cylinder.

At least one valve for regulating the intake of a fluid comprising either air or the mixture of fuel and air is provided between each cylinder and the intake system. Furthermore, an inlet end of the intake system which is remote from the cylinders is preferably associated with a valve for regulating the supply of fluid to the intake system, i.e. a throttle valve.

Due to the distance between the inlet end and the cylinder valves, and temporal regulations of the cylinder valves, the fluid has a tendency to pulsate in the intake system, i.e. pressure waves may build up in the intake system. Depending on the geometry of the intake system, a natural frequency of the pressure waves in the intake system is obtained at which natural frequency the cylinders are provided with an optimum fluid supply, resulting in an optimum torque output of the internal combustion engine. Prior art teaches tuning of the intake system, by for example varying lengths of members of the intake system, in order to obtain an optimum torque at a desired engine speed.

However, the optimum torque will only occur at one engine speed associated with the natural frequency of the pressure wave in the intake system and the engine torque will consequently be lower for engine speeds not associated with the aforesaid natural frequency, i.e. corresponding to the optimum engine speed. Thus, for an engine speed other than the optimal for a specific intake system, the engine torque obtained is lower than what is achievable by the engine. Internal combustion engines of this kind are sometimes referred to as internal combustion engines having only one engine torque peak.

In order to avoid the one peak behaviour of an internal combustion engine, prior art teaches the use of an intake system which comprises two portions, a first and a second intake portion, wherein the first and second portions are associated with a first and second set of cylinders, respectively. The first and second intake portions are in fluid communication by at least one first connection, wherein the first connection is provided with a first valve. Depending on the actual engine speed, the first valve is open or closed. The position of the first valve, i.e. open or closed, will influence the natural frequency of the pressure waves in the intake system and thus two natural frequencies of the intake system are obtainable: one when the first valve is closed and one when the first valve is open. Thus, the engine speed at which the aforementioned engine torque peak is obtained can be altered, and hence a high engine torque is obtainable for at least two engine speeds. This feature will in fact widen the interval of engine speeds, at which a high engine torque is obtained.

By introducing a second connection with a second valve between the first and second intake portions, a third natural frequency is obtainable, thus making the interval of high torque engine speeds even wider.

However, one drawback of introducing several natural frequencies in the intake system by utilizing the aforementioned technique is that a regulating system is required which regulates the valves in the intake system depending on the engine speed. This regulating system generally comprises the valves themselves as well as related mechanical and/or electrical arrangements. This implies an increase in the cost of the engine, as well as increasing the lead time for manufacturing the inlet system and thus the internal combustion engine. Furthermore, the aforementioned system generally requires software for regulating the valves and the software and the regulating system has to be thoroughly calibrated in order to function properly.

JP 60 069255 A discloses an air suction device consisting of two sets of surge tanks arranged above banks in the direction of crank shaft and opposing both ends thereof are closed and branched paths, branched from the surge tank and being extended towards suction ports in the banks located at mutually opposing sides so as to be intersected alternately. The surge tanks of both sides are communicated mutually through a pressure balance pipe so that the internal pressures thereof become equal. The radius of curvature of a cylinder path between a surge tank and a cylinder is increased and a plurality of cylinder paths is made independent from the surge tank.

US 5 031 598 concerns a multi-cylinder internal combustion engine having a plurality of cylinders which do not fire one after another and intake ports for the cylinders. A mechanical supercharger is disposed in an intake passage. An intake resonance passage having no enlarged volume space or chambers, which consists of a resonance passage part and a collecting passage part directly communicating with the resonance passage part, is connected to an outlet port of an intercooler forming a pressure reflecting portion. The intake ports for the cylinders are separately communicated with the collecting passage part by way of a plurality of independent intake passages. A bypass passage is connected between the collecting passage part and the intake passage downstream the mechanical supercharger so as to form a circular passage running the mechanical supercharger, intercooler, intake resonance passage.

DE 42 31 804 A1 concerns the intake for a multi-cylinder IC engine, with at least one valve for dividing the intake air flow into two individual part flows. The valve is maintained in a position, corresponding to the maximum charging efficiency, or a position reducing the efficiency. The valve is maintained in the position corresponding to the maximum charging efficiency, above a preset threshold value for the engine load across the complete rpm range.

### SUMMARY OF THE INVENTION

An object of the invention is to provide an intake system for an internal combustion engine which, in conjunction with an internal combustion engine, provides a wide interval of high torque engine speeds but does not present the disadvantages of prior art intake systems.

This object is achieved by a fluid charging arrangement as claimed in appended claim 1.

Thus, the invention relates to an intake system for an internal combustion engine having a plurality of cylinders. The system comprises a plurality of intake portions wherein each intake portion comprises an associated secondary pipe connected to an associated primary chamber. A largest cross-sectional area of the primary chamber is substantially greater than an average cross-sectional area of the associated secondary pipe. Each primary chamber is connected to at least one primary pipe adapted to communicate with at least one cylinder. At least two of the intake portions are in fluid communication via a first fluid communication means comprising at least one first passage. The first fluid communication means extends between the respective primary chambers. According to the invention, the first fluid communication means is a permanent passive fluid communication means and at least two of the intake portions are in fluid communication via a second fluid communication means comprising at least one second passage, the second fluid communication means extending between the respective secondary pipes wherein the second fluid communication means is a permanent, passive fluid communication means. By arranging a fluid communication between at least two secondary pipes, a third natural frequency of the aforementioned pressure waves is obtainable. This enables an even wider range of engine speeds at which a high engine torque can be attained.

As used herein, by the expression "cross-sectional area" of a member it is meant the area of an internal cross-section, which cross-section is perpendicular to the longitudinal extension of the member.

Furthermore, as used herein, by the expression "substantially greater than" it is meant that a largest cross-sectional area of the primary chamber is at least 1.2, preferably at least 1.4, times larger than the average cross-sectional area of the associated secondary pipe.

The first communication means is a permanent means, not adapted to substantially vary any of the cross-sections of the first fluid communication means, for example an intermittently actuated valve is not to be considered as providing substantially constant cross-section. Thus, the first fluid communication means does not comprise any valves or similar means for regulating any cross-sectional area of the first fluid communication means. Thus, the first fluid communication means of the invention may also be referred to as a passive or a fixed fluid communication means.

Using an intake system pursuant to the invention in an internal combustion engine will result in an engine where a wide engine speed interval with a high engine torque is obtainable, but where disadvantages of prior art systems, e.g. the use of valves and corresponding control systems, are avoided. Providing at least one passage between at least two primary chambers may introduce a second natural frequency of the pressure waves of the fluid in the inlet, in addition to the original first natural frequency of the pressure waves which is always present in a conduit system, and the second natural frequency may preferably be adjusted so as to be located in an interval corresponding to relevant engine speeds of the internal combustion engine, i.e. engine speeds at which the engine is particularly intended to operate.

Since the at least one first passage, according to the invention, is passive, i.e. not adapted to change any cross-sectional area in the passage, the need for devices such as valves and related mechanical and/or electrical arrangements is omitted. Prior art inlet systems which are adapted to have a wide engine torque interval generally require the aforementioned devices in order to function properly. Furthermore, prior art inlet systems generally require control equipment comprising a control algorithm which has to be calibrated in order to obtain a suitable value of the second natural frequency of the inlet system, as well as a desired engine torque. In the inlet system according to the present invention, no calibration or tuning of each inlet system is required. Instead, a shape of the first fluid communication means is determined in the design phase of the inlet system and each inlet system of the corresponding design is later provided with a first fluid communication means with the predetermined passage characteristics. This significantly simplifies the manufacturing, mounting and tuning of the intake system.

According to one embodiment of the invention, a smallest cross-sectional area of the first fluid communication means is in a range of 0.1-50 %, preferably 1-25 %, more preferably 4-16 %, of a largest cross-sectional area of the primary chambers in fluid communication. By arranging the smallest cross-sectional area of the first fluid communication means in the aforesaid area intervals, the fluids in each intake portion will partially communicate, resulting in a second natural frequency of the pressure waves. However, since the fluids in each intake portion will only communicate partially, the original first natural frequency, i.e. the natural frequency of the intake system without the first fluid communication means connecting at least two chambers, will remain in the intake system. In fact, for intake systems wherein the cross-sectional area of the first fluid communication means is below 100 % of the largest cross-sectional area of the primary chambers in fluid communication, the first and second natural frequencies may simultaneously exist due to a partial communication between the intake portions, although the aforementioned area intervals are preferable. However, a partial fluid communication may also be achieved by other means than adjusting the cross-sectional area of the first fluid communication means. For example, at least one of the first chambers in fluid communication may be internally equipped with protrusions, e.g. ribs, which may influence the fluid communication between the first chambers in fluid communication.

According to a further embodiment of the invention, a length of the secondary pipe of an intake portion in fluid communication with another intake portion is in a range of 50- 200 %, preferably 50 - 150 %, more preferably 70-130 %, of the shortest of the least one primary pipe of the intake portion. By arranging the length of the secondary pipe in one of the aforementioned ranges, eligible first and second natural frequencies are obtainable.

According to another embodiment of the invention, a smallest cross-sectional area of the second fluid communication means is in a range of 0.01-50 %, preferably 0.2-25 %, more preferably 1-10 %, of a largest cross-sectional area of the secondary pipes in fluid communication. Analogical to the previously disclosed reasoning regarding the cross-sectional area of the first fluid communication means, the smallest cross-sectional area of the second fluid communication means is preferably selected to be sufficiently large in order to attain a third natural frequency, but also sufficiently small in order not to erase any one of the first and second natural frequencies.

According to a further embodiment of the invention, each secondary pipe has a first end associated with the respective primary chamber. The second fluid communication means is located at fluid communication distances from the first end of each secondary pipe, associated with said second fluid communication means. Each fluid communication distance is 10- 90 %, preferably 20- 80 %, more preferably 30- 60 %, of the length of the corresponding secondary pipe. By arranging the length of the secondary pipe in one of the aforementioned distance ranges, an eligible third natural frequency, in relation to the first and second natural frequencies, is obtainable. Furthermore, all fluid communication distances are preferably substantially equal.

According to another embodiment of the invention, the secondary pipes further have substantially equal length in order to obtain an appropriate build up of pressure waves in the intake system. In addition to, or instead of, having substantially equal length, the secondary pipes may preferably have substantially equal cross-sectional areas.

According to another embodiment of the invention, each secondary pipe has a second end remote from the respective primary chamber and each second end is adapted to form a branch of a Y-connection. Furthermore, one opening of the Y-connection may be adapted to be associated with a throttle valve of an internal combustion engine.

According to another embodiment of the invention, the aforementioned second end of each secondary pipe is connected to a secondary plenum, said secondary plenum being common for all the secondary pipes. Utilizing a secondary plenum as previously described, each intake portion is operable to receive a substantially mutually equal fluid supply which facilitates the build up of the three aforesaid natural frequencies. Furthermore, the shape of the secondary plenum may be shaped in order to obtain an appropriate behaviour of the pressure waves in the intake system.

According to a further embodiment of the invention, the primary chambers are a unitary component, internally separated by at least one wall. The at least one wall is provided with the at least one first fluid communication means. Thus, a compact intake system is obtainable which requires little space in the internal combustion engine. Based on the same arguments, the secondary pipes may also be a unitary component, internally separated by at least one wall, said at least one wall being provided with said second fluid communication means.

According to another embodiment of the invention, the at least one of the primary chambers is a separate component, connected to at least one of the other chambers by a first connection provided with the first fluid communication means. In some applications for the intake system, it may be preferred to separate at least one primary chamber of the intake system, for example due to packaging problems which may occur when mounting an intake system to an internal combustion engine. By providing the at least one separated primary chamber with a connection provided with the first fluid communication means, an objective of the present invention, i.e. to attain a first and second natural frequency in the intake system, is still achievable. Based on the same arguments, at least one of the secondary pipes may be a separate component, connected to at least one of the other secondary pipes by a second connection provided with said second fluid communication means.

Another embodiment of the invention relates to an internal combustion engine comprising an intake system according to the present invention.

A further embodiment of the invention relates to a vehicle comprising an internal combustion engine with the above mentioned features.

A second object of the present invention is to provide a method of supplying an internal combustion engine, having a plurality of cylinders and a plurality of possible engine speeds, with a fluid comprising either air or a mixture of fuel and air, wherein a high engine torque is obtainable for a plurality of engine speeds.

This second object is achieved by a distance adjustment method defined in the attached claim 18.

The method according to the present invention relates to a method of supplying an internal combustion engine, having a plurality of cylinders and a plurality of possible engine speeds, with a fluid comprising either air or a mixture of fuel and air, comprising the steps of:
- Conveying the fluid through a intake system comprising at least two intake portions, each comprising a secondary pipe connected to a primary chamber, a largest cross-sectional area of the primary chamber being substantially greater than an average cross-sectional area of the associated secondary pipe, towards the cylinders of said engine, and
- allowing said fluid to flow through at least one first fluid communication means, connecting at least two of said primary chambers, and
   - allowing said fluid to flow through a second fluid communication means, connecting at least two of said secondary pipes;
   - allowing said fluid to flow through said second fluid communication means irrespective of said engine speed of said internal combustion engine.
   .
According to the invention, the method further comprises the step of allowing the fluid to flow through the first fluid communication means irrespective of the engine speed of the internal combustion engine.

According to a further embodiment of the method of the invention, the method further includes the first communication means having a substantially constant cross-sectional area irrespective of the engine speed of the internal combustion engine. Furthermore, the method of the invention may in a further embodiment comprise the cross-sectional area of the first communication means being in a range of 0.1-50 %, preferably 1-25 %, more preferably 4-16 %, of a largest cross-sectional area of the primary chambers in fluid communication.

Another embodiment of the inventive method further comprises the second fluid communication means having a substantially constant cross-sectional area irrespective of said engine speed of said internal combustion engine. Furthermore, the method of the invention may in a further embodiment comprise the cross-sectional area of the second fluid communication means being in a range of 0.1-50 %, preferably 0.2-25 %, more preferably 1-10 %, of a largest cross-sectional area of the secondary pipes in fluid communication.

### BRIEF DESCRIPTION OF THE DRAWINGS

The present invention will hereinafter be further explained by means of non-limiting examples with reference to the appended figures wherein;
- Fig. 1: is a schematic view of a first prior art intake system;
- Fig. 2: is a graph illustrating the engine torque as a function of engine speed for an internal combustion engine utilizing the Fig. 1 intake system;
- Fig. 3: is a schematic view of a second prior art intake system;
- Fig. 4: is a graph illustrating the engine torque as a function of engine speed for two prior art intake systems;
- Fig. 5: is a schematic view of another prior art intake system;
- Fig. 6: is a graph illustrating the engine torque as a function of engine speed for the Fig. 5 intake system;
- Fig. 7: is a schematic view of an intake system according to an embodiment of the present invention;
- Fig. 8: is a graph illustrating the engine torque as a function of engine speed for the Fig. 7 embodiment of the present invention;
- Fig. 9: is a schematic view of an intake system according to a further embodiment of the present invention;
- Fig. 10: is a cross-sectional view of an embodiment of the present invention; and
- Fig. 11: is a cross-sectional view of a further embodiment of the present invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

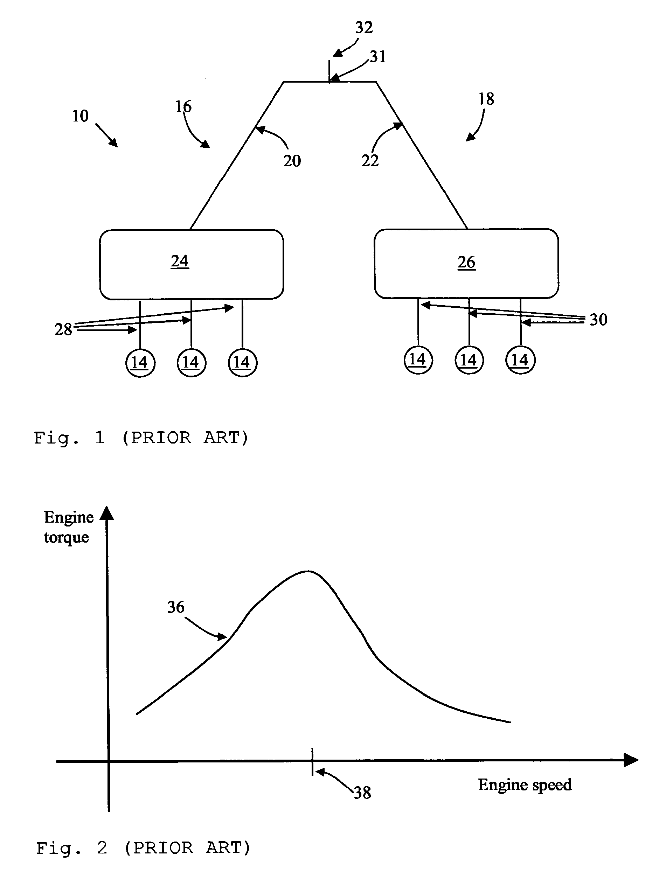

Fig. 1 illustrates a schematic view of a prior art intake system 10 for an internal combustion engine 12 having a plurality of cylinders 14. As may be gleaned from Fig. 1, the prior art intake system 10 system comprises two intake portions 16, 18, wherein each intake portion 16, 18 comprises a secondary pipe 20, 22 connected to a primary chamber 24, 26. Each primary chamber 24, 26 is connected to at least one primary pipe 28, 30 adapted to communicate with at least one cylinder 14.

The prior art intake system 10 supplies an internal combustion engine 12 with a fluid, comprising either air or a mixture of air and fuel depending on the type of internal combustion engine 12 being supplied with the fluid. The fluid supply is generally regulated by an admission valve located in an intake opening 32 of the intake system; the admission valve is generally associated with an engine throttle, and at least one cylinder valve 34 for each cylinder 14 of the internal combustion engine. The cylinder valves are not illustrated in the figures. However, a cylinder valve is generally located in the vicinity of a cylinder 14 and the cylinder valve is generally attached in a cylinder head of an internal combustion engine. Due to temporal regulation of the opening of the valves, pressure waves may build up in the prior art intake system 10.

This is due to the fact that when one of the cylinders 14 is supplied with fluid during an intake stroke, fluid in the intake system 10 will progress towards the associated cylinder valve due to a negative pressure at the valve. The negative pressure emanates from a pressure difference between the cylinder 14 and the associated primary pipe 28 of the primary chamber 24; the pressure in the cylinder 14 is substantially smaller than the pressure in the associated primary pipe 28 during the intake stroke. Thus, a negative pressure wave propagates towards the intake opening 32 and later rebounds towards the primary chamber 24, but as a positive pressure wave. The build up of pressure waves may be further enhanced in an intake system 10 comprising two primary chambers 24, 26 as illustrated in Fig. 1. Such enhancement derives from the fact that the aforementioned negative pressure wave propagating from a first primary chamber 24 is able to rebound towards the first primary chamber 24 as a positive pressure wave at the same time as a negative pressure wave rebounds towards the second primary chamber 26. Thus, a standing wave is susceptible to being built up, having a pressure node at an intersection of the two secondary pipes 20, 22.

A natural frequency of the pressure waves is stipulated by the geometry of the intake system 10. The internal combustion engine 12 connected to the prior art intake system 10 is generally adapted to provide a plurality of engine speeds and the engine torque obtained from the internal combustion engine generally varies with the engine speed.

Fig. 2 depicts a graph 36, illustrating the engine torque as a function of the engine speed for a typical internal combustion engine utilizing a prior art intake system, for example the one illustrated in Fig. 1. As may be gleaned from Fig. 2, a maximum engine torque is obtainable at a certain engine speed; the maximum torque engine speed is indicated by 38 in Fig. 2. The engine speed, for which a maximum torque is obtainable, corresponds to the natural frequency of the prior art intake system 10, since the internal combustion engine 12 will be provided with a maximum of fluid at this engine speed.

However, for other engine speeds than the optimum, an engine torque lower than the optimum is obtained. Consequently, the capacity of the internal combustion engine is not fully exploited for engine speeds other than the optimum one.

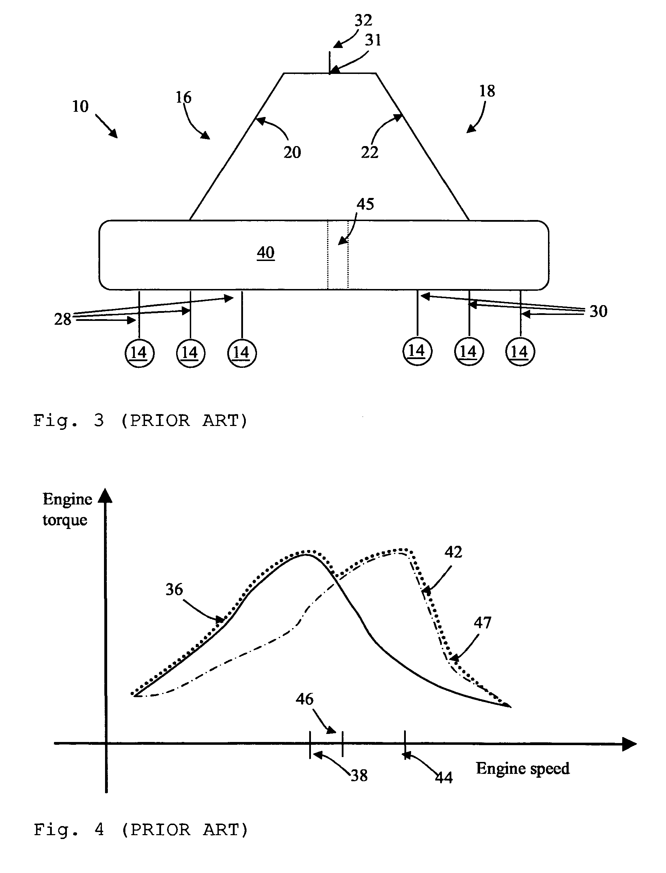

In order to address this, some prior art intake system use the following insight: if the two chambers 24, 26 are merged to a common chamber 40 or a plenum, as illustrated in Fig. 3, a new characteristic of the engine torque as a function of engine speed is obtained; as denoted by 42 in the graphs in Fig. 4. A natural frequency of the intake system 10 is obtained, resulting in a new engine speed at which the engine torque reaches an optimum value, since pressure waves are allowed to propagate within the common chamber 40. This new maximum torque engine speed is indicated by 44 in Fig. 4. Prior art teaches that the two engine torque characteristics depicted by graphs 36 and 42 in Fig. 4 may be combined by utilizing a barrier 45 in the common chamber 40 which is present at low engine speeds, resulting in an engine torque characteristic as illustrated by graph 36 in Fig. 4. When the engine speed exceeds a certain threshold value, for example a value corresponding to the engine speed indicated by numeral 46 in Fig. 4, the barrier 45 is removed and the engine torque characteristics will switch to the characteristics illustrated by graph 42. Thus, an engine torque characteristic is obtainable which for all engine speeds is the higher value of the two characteristics indicated by graphs 36 and 42. An example of such a characteristic is illustrated by graph 47 in Fig. 4.

Prior art further teaches that the barrier effect can be achieved by inserting a valve in the common chamber 40, or plenum, and the valve is open or closed, based on the actual engine speed of the internal combustion engine.

However, as previously stated, the disadvantages of using a valve is that this solution requires several components which may be expensive and cumbersome to install in the intake system. Furthermore, a regulating system is needed in order to open or close the valve based on the current engine speed. This regulating system requires tuning in order to function properly.

The intake system 10 according to the present invention does not involve the aforementioned downsides of prior art intake systems and the invention will hereinbelow be exemplified by embodiments.

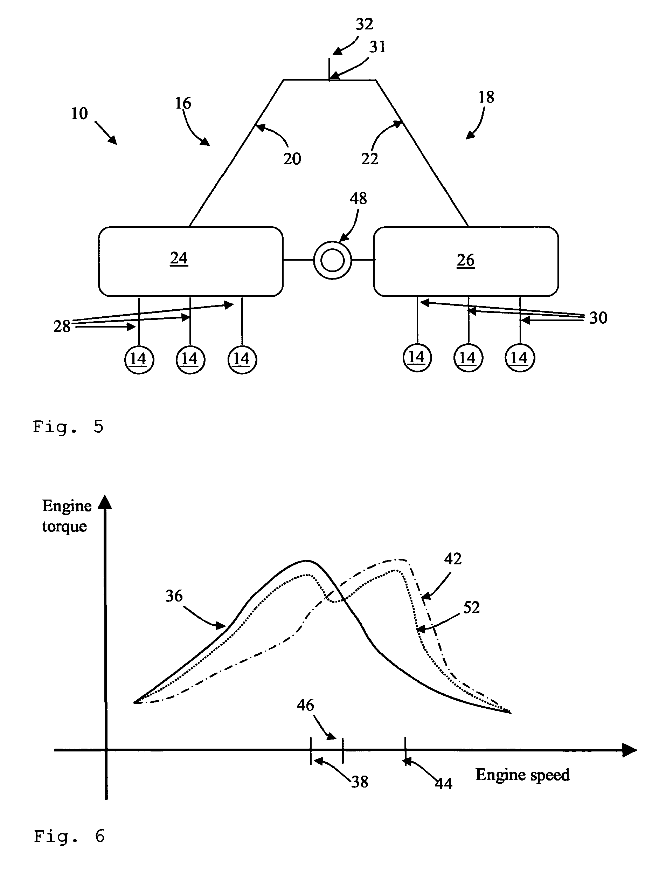

Fig. 5 illustrates a schematic view of an intake system 10 for an internal combustion engine 12 having a plurality of cylinders 14. The internal combustion engine 12 illustrated in Fig. 5 has six cylinders 14, but the intake system according to the invention may be adapted to cooperate with an internal combustion engine 12 having more or less than six cylinders 14, as long as the internal combustion engine is equipped with at least two cylinders 14.

As illustrated in Fig. 5, the system comprises a plurality of intake portions 16, 18, wherein each intake portion 16, 18 comprises a secondary pipe 20, 22 connected to a primary chamber 24, 26. Fig. 5 illustrates an intake system comprising only two intake portions 16, 18 but other embodiments may comprise three or more intake portions. In the embodiments of the invention illustrated in herein, only intake systems with two intake portions are illustrated since two intake portions suffice to explain the principles of the invention.

A largest cross-sectional area of the primary chamber 24, 26 is substantially greater, for example at least 1.2, preferably 1.4, times greater than an average cross-sectional area of the associated secondary pipe 20, 22. Each primary chamber 24, 26 is connected to its respective primary pipe 28, 30 adapted to communicate with the cylinders 14.

As indicated in Fig. 5, the two intake portions 16, 18 are in fluid communication via a first fluid communication means 48 comprising a first passage (not shown). The first fluid communication means 48 extends between the respective primary chamber 24, 26. The first fluid communication means 48 is a permanent, passive fluid communication means 48. In other words, the means 48 contains no active parts.

The engine torque characteristics obtainable for an internal combustion engine utilizing an intake system 10 according to the Fig. 5 embodiment is illustrated by graph 52 in Fig. 6. Included in Fig. 6 are further the graphs of the prior art intake systems illustrated in Figs. 1 and 3, respectively.

As may be gleaned from Fig. 6, the engine torque value of an internal combustion engine 12 being equipped with the Fig. 5 intake system 10 is susceptible to having a wider range of engine speeds than either of the two engine torque characteristics of prior art, indicated by reference numerals 36 and 42, respectively. As previously stated, prior art teaches that the engine torque characteristics corresponding to the graphs 36 and 42 may be combined by utilizing a valve system in conjunction with a regulating system. However, the intake system 10 of the Fig. 5 embodiment will in fact result in an equally wide range of engine speeds at which high engine torques are obtainable, even though the intake system 10 according to the invention is a passive system, i.e. it does not contain any moving parts nor any regulating means. The reason for obtaining the wide engine torque range utilizing an intake system 10 of the invention emanates, as previously described, from the fact that the first and second primary chambers 16, 18 will communicate partially through the first fluid communication means 48, which in turn will allow for two natural frequencies to exist in parallel.

A smallest cross-sectional area of the first fluid communication means 48 is preferably in a range of 0.1-50 %, more preferably 1-25 %, most preferably 4-16 %, of the largest cross-sectional area of the primary chambers 24, 26 in fluid communication.

A length of the secondary pipe 20 of an intake portion 16 in fluid communication with another intake portion 18 is preferably in a range of 50- 200 %, more preferably 50 - 150 %, most preferably 70 -130 %, of the shortest of the primary pipes 28 of the intake portion 16. As used herein, a length of a primary pipe 28 is defined as the distance run along the primary pipe 28 from a primary chamber 24 with which the primary pipe 28 is associated, to the cylinder valves corresponding to the primary pipe 28. As such, the length of the primary pipe 28 may in some applications in fact include a length of a passage in e.g. a cylinder head (not shown) in which the cylinder valves are located. Furthermore, as used herein, the length of a secondary pipe 20, 22 is defined as the distance run from a primary chamber 24 with which the secondary pipe 20 is associated, along the secondary pipe 20, 22 until the secondary pipe terminates, which may for example be in a Y-connection 31, as illustrated in Fig. 5, or in a secondary plenum, as will be discussed below.
In the description, the aforementioned definitions of the lengths of the primary and secondary pipes, respectively, will hereinafter apply.

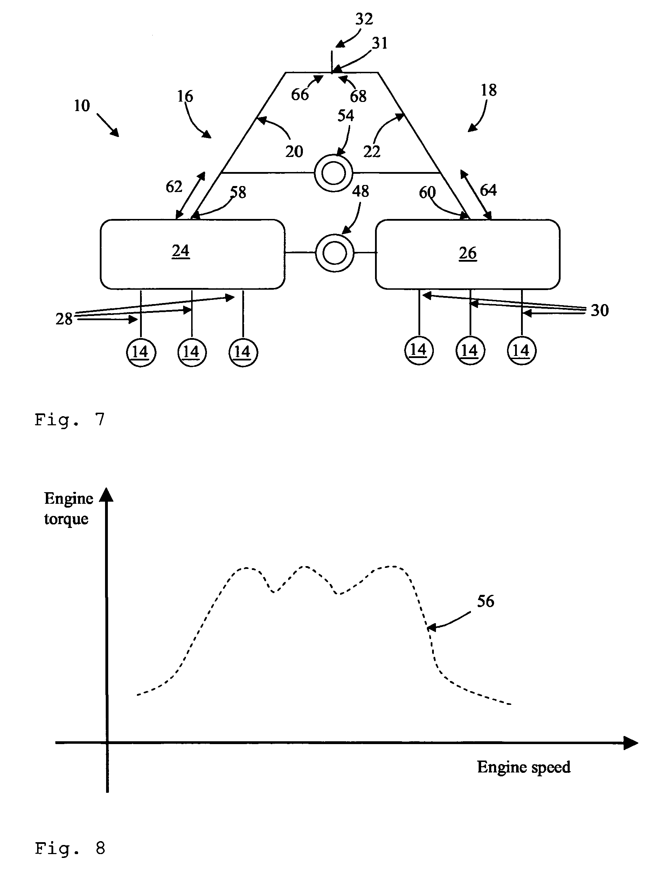

Fig. 7 illustrates an embodiment of an intake system 10 of the invention, wherein two of the intake portions 16, 18 are in fluid communication via a second fluid communication means 54 comprising a second passage. The second fluid communication means 54 extends between the secondary pipes 20, 22 wherein the second fluid communication means 54 is a permanent, passive fluid communication means.

Fig. 8 discloses a graph 56 illustrating an engine torque characteristic which is obtainable when utilizing the Fig. 7 embodiment of the intake system 10 according to the invention in an internal combustion engine 12. As may be gleaned from Fig. 8, a third natural frequency of the pressure waves in the intake system 10 is obtained, resulting in a third torque peak in the engine torque characteristics. Thus, an even wider interval of engine speeds is obtained, for which a high engine torque is attainable, while still utilizing a passive inlet system 10.

The smallest cross-sectional area of the second fluid communication means 54 is preferably in a range of 0.01-50 %, more preferably 0.2-25 %, most preferably 1-10 %, of the largest cross-sectional area of the secondary pipes 20, 22 in fluid communication.

Each of the secondary pipes 20, 22 has a first end 58, 60 associated with the respective primary chamber 24, 26 and the second fluid communication means 54 is preferably located at fluid communication distances 62, 64 from the first end 58, 60 of each secondary pipe 20, 22 associated with the second fluid communication means 54. Each fluid communication distance 62, 64 is preferably 10- 90 %, more preferably 20- 80 %, most preferably 30- 60 %, of the length of the corresponding secondary pipe 20, 22.

In a preferred embodiment of the invention, all fluid communication distances 62, 64 are substantially equal. Furthermore, all secondary pipes 20, 22 preferably have substantially equal length and may preferably have substantially equal largest cross-sectional areas.

As illustrated in Fig. 7 each secondary pipe 20, 22 preferably has a second end 66, 68 remote from the respective primary chamber 24, 26 and each second end 66, 68 is adapted to form a portion of a Y-connection 31.

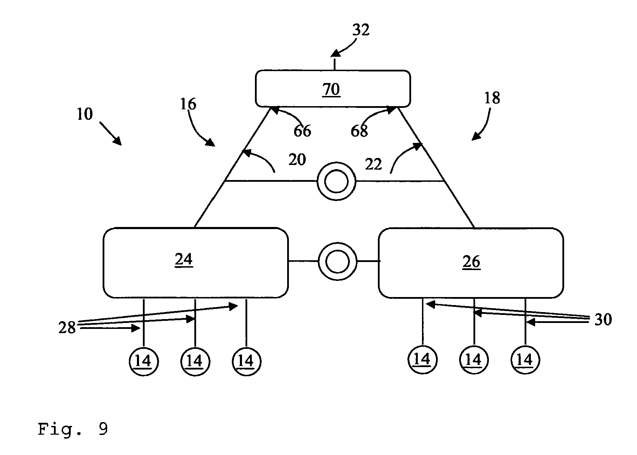

However, as illustrated in Fig. 9, each second end 66, 68 of the respective secondary pipe 20, 22 may instead be connected to a secondary plenum 70. The secondary plenum 70 is common for all the secondary pipes 20, 22.

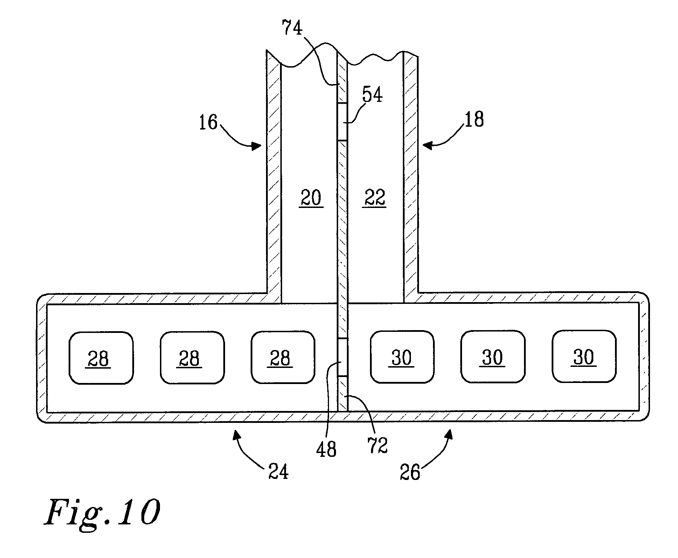

As indicated in the embodiment of the invention illustrated in Fig. 10, the primary chambers 24, 26 may be a unitary component, internally separated by one or more walls 72. The wall 72 is provided with the first fluid communication means 48 which, in the Fig. 10 implementation of the first fluid communication means 48, is constituted by an opening. Furthermore, the secondary pipes 20, 22 may in some embodiments of the invention be a unitary component, internally separated by one or more walls 74. The wall 74 is provided with the second fluid communication means 54.

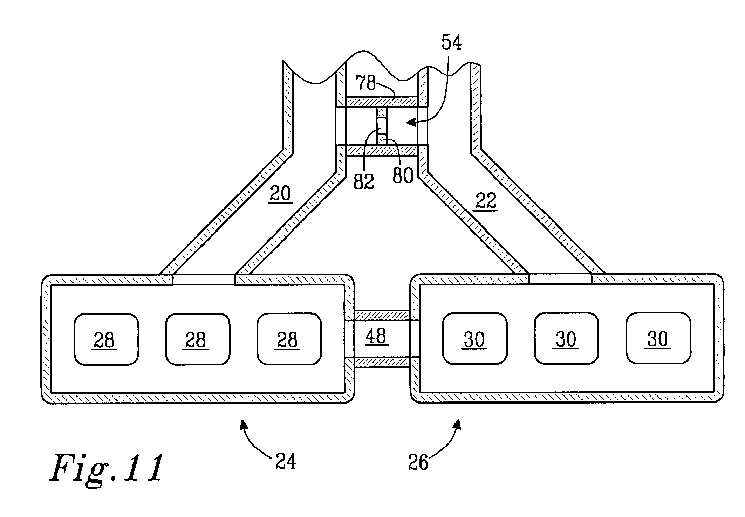

In another embodiment of the invention, illustrated in Fig. 11, one of the primary chambers 24 is a separate component, connected to of the other chamber 26 by a first connection provided with the first fluid communication means 48. Furthermore, at least one of the secondary pipes 20 may in some embodiments of the invention be a separate component, connected to at least one of said other secondary pipes 22 by a second connection 78 provided with the second fluid communication means 54.

As illustrated in Fig. 11, the first fluid communication means 48 may simply be an opening in the first connection and a similar solution may in some applications be provided for a possible second connection 78. However, as further illustrated in Fig. 11, wherein the second connection 78 merely serves as an example, either the first or the second passage 78 may be internally provided with a wall 80 or a constriction of the actual passage 78 and the wall 80 may in turn be provided with a passage opening 82. Thus, the second fluid communication means 54 in the embodiment of the invention illustrated in Fig. 11 comprises three internal portions wherein the cross-section of each internal portion differs from the adjacent internal portion or portions.

Finally, an example of an actual intake system 10, pursuant to the teachings of the present invention is presented. It should be noted that the embodiment of the invention disclosed hereinbelow merely serves as an example and the dimensions presented below are simply one set of a plurality of different combinations of dimensions which all fall within the scope of the claims.

This specific embodiment of the intake system 10 is an air intake system intended to be used in conjunction with a six-cylinder-in-line type internal combustion engine 12 having a fuel injection system. The intake system 10 is constituted by two intake portions 16, 18 wherein the primary chamber 24, 26 of each portion 16, 18 is provided with three primary pipes 28, 30. Thus a total of six primary pipes, one for each cylinder 14 is provided in the intake system 10. The primary chambers 24, 26 are a unitary component separated by a wall 72 provided with a first fluid communication means 48, in this specific embodiment constituted by an opening in the chamber wall 72. Each primary chamber is 24, 26 connected to a secondary pipe 20, 22. In the present embodiment of the application, the secondary pipes 20, 22 are separate tubes, extending from the respective primary chambers 24, 26 to a Y-connection 31. Halfway up each secondary pipe 20, 22 a connection in form of a connection pipe having the same cross-sectional area as each secondary pipe 20, 22 is provided, allowing a fluid communication between the secondary pipes. The connection pipe is provided with a wall 80 having a passage opening 82.

In this specific embodiment of the intake system of the invention, the primary pipes 28, 30 are conical, each primary pipe having an inner diameter of 46 mm at the primary chamber 24, 26 and 33 mm at the location of the cylinder valve. Each primary pipe 28, 30 has a length of 290 mm. Each secondary pipe 20, 22 has a constant inner diameter of 62 mm and the length of each secondary pipe is 310 mm. The total length of the unitary component comprising the primary chambers 24, 26 is 550 mm, thus each primary chamber 24, 26 has an internal length of 275 mm. Each primary chamber 24, 26 has an equivalent diameter, i.e. the diameter of a circle having equal cross-sectional area as the primary chamber 24, 26, of 75 mm.

The first fluid communication means 48 is constituted by a cylindrical opening in the chamber wall 72 and the diameter of the opening is 15 mm. The passage opening 82 in the connection pipe has a cylindrical passage opening having a diameter of 15.5 mm. The total volume of the intake system 10 is 7.7 litres.

Further modifications of the invention within the scope of the claims are feasible. For instance, the first fluid communication means 48 may comprise a plurality of passages of equal or different shape. Furthermore, the first fluid communication means 48 may comprise at least two walls 72 separating a first and a second primary chamber 24, 26 which are a unitary component, wherein each wall 72 is provided with at least one opening.

## Claims

1. An intake system (10) for an internal combustion engine (12) having a plurality of cylinders (14), said system comprising a plurality of intake portions (16, 18); wherein each intake portion (16, 18) comprises an associated secondary pipe (20, 22) connected to an associated primary chamber (24, 26), wherein a largest cross-sectional area of the primary chamber (24, 26) is substantially greater than an average cross-sectional area of the associated secondary pipe (20, 22), said primary chamber (24, 26) being connected to at least one primary pipe (28, 30) adapted to communicate with at least one of said plurality of cylinders (14), wherein at least two of said intake portions (16, 18) are in fluid communication via a first fluid communication means (48) comprising at least one first passage, said first fluid communication means (48) extending between the respective primary chambers (24, 26), and wherein said first fluid communication means (48) is a permanent, passive fluid communication means, **characterized in that** at least two of said intake portions (16, 18) are in fluid communication via a second fluid communication means (54) comprising at least one second passage, said second fluid communication means (54) extending between the respective secondary pipes (20, 22) wherein said second fluid communication means (54) is a permanent, passive fluid communication means.

2. The intake system (10) according to claim 1, wherein a smallest cross-sectional area of said first fluid communication means (48) is in a range of 0.1-50 %, preferably 1-25 %, more preferably 4-16 %, of a largest cross-sectional area of the primary chambers (24, 26) in fluid communication.

3. The intake system (10) according to any one of the preceding claims, wherein a length of said secondary pipe (20) of an intake portion (16) in fluid communication with another intake portion (18) is in a range of 50- 200 %, preferably 50 - 150 %, more preferably 70 - 130 %, of the shortest of the at least one primary pipe (28) of said intake portion (16).

4. The intake system (10) according to any one of the preceding claims, wherein a smallest cross-sectional area of said second fluid communication means (54) is in a range of 0.01-50 %, preferably 0.2-25 %, more preferably 1-10 %, of a largest cross-sectional area of the secondary pipes (20, 22) in fluid communication.

5. The intake system (10) according to claim 4, wherein each said secondary pipe (20, 22) has a first end (58, 60) associated with the respective primary chamber (24, 26) and said second fluid communication means (54) is located at fluid communication distances (62, 64) from the first end (58, 60) of each secondary pipe (20, 22), associated with said second fluid communication means (54), wherein each fluid communication distance (62, 64) is 10- 90 %, preferably 20- 80 %, more preferably 30- 60 %, of the length of the corresponding secondary pipe (20, 22).

6. The intake system (10) according to claim 5, wherein all fluid communication distances (62, 64) are substantially equal.

7. The intake system (10) according to any one of the preceding claims, wherein all secondary pipes (20, 22) have substantially equal length.

8. The intake system (10) according to any one of the preceding claims, wherein all secondary pipes (20, 22) have substantially equal largest cross-sectional areas.

9. The intake system (10) according to any of the preceding claims, wherein each said secondary pipe (20, 22) has a second end (66, 68) remote from the respective primary chamber (24, 26) and each second end (66, 68) is adapted to form a branch of a Y-connection (31).

10. The intake system (10) according to any of the preceding claims, wherein each said secondary pipe (20, 22) has a second end (66, 68) remote from the respective primary chamber (24, 26) and each second end (66, 68) is connected to a secondary plenum (70), said secondary plenum (70) being common for all the secondary pipes (20, 22).

11. The intake system (10) according to any one of the preceding claims, wherein said primary chambers (24, 26) are a unitary component, internally separated by at least one wall (72), said at least one wall (72) being provided with said first fluid communication means (48).

12. The intake system (10) according to any one of claims 1 to 10, wherein at least one of said primary chambers (24) is a separate component, connected to at least one of said other chambers (26) by a first connection provided with said first fluid communication means (48).

13. The intake system (10) according to any one of the preceding claims, wherein said secondary pipes (20, 22) are a unitary component, internally separated by at least one wall (74), said at least one wall (74) being provided with said second fluid communication means (54).

14. The intake system (10) according to any one of claims 1 to 12, wherein at least one of said secondary pipes (20) is a separate component, connected to at least one of said other secondary pipes (22) by a second connection (78) provided with said second fluid communication means (54).

15. An internal combustion engine (12) comprising an intake system (10) according to any one of the preceding claims.

16. A vehicle (80) comprising an internal combustion engine (12) according to claim 15.

17. A method of supplying an internal combustion engine (12), having a plurality of cylinders (14) and a plurality of possible engine speeds, with a fluid comprising either air or a mixture of fuel and air, said method comprising the steps of:
- conveying said fluid through an intake system (10) comprising at least two intake portions (16, 18), each comprising a secondary pipe (20, 22) connected to a primary chamber (24, 26), wherein a largest cross-sectional area of the primary chamber (24, 26) is substantially greater than an average cross-sectional area of the associated secondary pipe (20, 22), towards the cylinders (14) of said engine (12),
- allowing said fluid to flow through a first fluid communication means (48), connecting at least two of said primary chambers (24, 26) and
- allowing said fluid to flow through said first fluid communication means (48) irrespective of said engine speed of said internal combustion engine (12); **characterized by**
- allowing said fluid to flow through a second fluid communication means (54) connecting at least two of said secondary pipes (20, 22), and
- allowing said fluid to flow through said second fluid communication means (54) irrespective of said engine speed of said internal combustion engine (12).

18. The method according to claim 17 in which
- said first communication means (48) has a substantially constant cross-sectional area irrespective of said engine speed of said internal combustion engine (12).

19. The method according to claim 18 in which
- the cross-sectional area of said first communication means (48) is in a range of 0.1-50 %, preferably 1-25 %, more preferably 4-16 %, of a largest cross-sectional area of the primary chambers (24, 26) in fluid communication.

20. The method according to claim 17 wherein:
- said second fluid communication means (54) has a substantially constant cross-sectional area irrespective of said engine speed of said internal combustion engine (12).

21. The method according to claim 20 wherein
- said second fluid communication means (54) is in a range of 0.1-50 %, preferably 0.2-25 %, more preferably 1-10 %, of a largest cross-sectional area of the secondary pipes (20, 22) in fluid communication.

## Patentansprüche

1. Einlasssystem (10) für eine Brennkraftmaschine (12), die mehrere Zylinder (14) besitzt, wobei das System mehrere Einlassabschnitte (16, 18) umfasst, wobei jeder Einlassabschnitt (16, 18) ein zugeordnetes Sekundärrohr (20, 22) enthält, das mit einer zugeordneten Primärkammer (24, 26) verbunden ist, wobei eine größte Querschnittsfläche der Primärkammer (24, 26) wesentlich größer als eine durchschnittliche Querschnittsfläche des zugeordneten Sekundärrohrs (20, 22) ist, wobei die Primärkammer (24, 26) mit wenigstens einem Primärrohr (28, 30) verbunden ist, das dazu ausgelegt ist, mit wenigstens einem der mehreren Zylinder (14) zu kommunizieren, wobei wenigstens zwei der Einlassabschnitte (16, 18) über ein erstes Fluidkommunizierungsmittel (48), das wenigstens einen ersten Durchlass aufweist, fluidisch kommunizieren, wobei sich das erste Fluidkommunizierungsmittel (48) zwischen den jeweiligen Primärkammern (24, 26) erstreckt und wobei das erste Fluidkommunizierungsmittel (48) ein permanentes, passives Fluidkommunizierungsmittel ist,
**dadurch gekennzeichnet, dass** wenigstens zwei der Einlassabschnitte (16, 18) über ein zweites Fluidkommunizierungsmittel (54), das wenigstens einen zweiten Durchlass aufweist, fluidisch kommunizieren, wobei sich das zweite Fluidkommunizierungsmittel (54) zwischen den jeweiligen Sekundärrohren (20, 22) erstreckt, wobei das zweite Fluidkommunizierungsmittel (54) ein permanentes, passives Fluidkommunizierungsmittel ist.

2. Einlasssystem (10) nach Anspruch 1, wobei eine kleinste Querschnittsfläche des ersten Fluidkommunizierungsmittels (48) in einem Bereich von 0,1 bis 50 %, vorzugsweise von 1 bis 25 % und stärker bevorzugt von 4 bis 16 % der größten Querschnittsfläche der Primärkammern (24, 26), die fluidisch kommunizieren, liegt.

3. Einlasssystem (10) nach einem der vorhergehenden Ansprüche, wobei eine Länge des Sekundärrohrs (20) eines Einlassabschnitts (16), der mit einem weiteren Einlassabschnitt (18) fluidisch kommuniziert, in einem Bereich von 50 bis 200 %, vorzugsweise von 50 bis 150 % und stärker bevorzugt von 70 bis 130 % des Kürzesten des wenigstens einen Primärrohrs (28) des Einlassabschnitts (16) liegt.

4. Einlasssystem (10) nach einem der vorhergehenden Ansprüche, wobei eine kleinste Querschnittsfläche des zweiten Fluidkommunizierungsmittels (54) in einem Bereich von 0,01 bis 50 %, vorzugsweise von 0,2 bis 25 % und stärker bevorzugt von 1 bis 10 % einer größten Querschnittsfläche der Sekundärrohre (20, 22), die fluidisch kommunizieren, liegt.

5. Einlasssystem (10) nach Anspruch 4, wobei jedes Sekundärrohr (20, 22) ein erstes Ende (58, 60) besitzt, das der jeweiligen Primärkammer (24, 26) zugeordnet ist, und das zweite Fluidkommunizierungsmittel (54) sich in Fluidkommunizierungsabständen (62, 64) von dem ersten Ende (58, 60) jedes Sekundärrohrs (20, 22), dem das zweite Fluidkommunizierungsmittel (54) zugeordnet ist, befindet, wobei jeder Fluidkommunizierungsabstand (62, 64) im Bereich von 10 bis 90 %, vorzugsweise von 20 bis 80 % und stärker bevorzugt von 30 bis 60 % der Länge des entsprechenden Sekundärrohrs (20, 22) liegt.

6. Einlasssystem (10) nach Anspruch 5, wobei alle Fluidkommunizierungsabstände (62, 64) im Wesentlichen gleich sind.

7. Einlasssystem (10) nach einem der vorhergehenden Ansprüche, wobei alle Sekundärrohre (20, 22) im Wesentlichen die gleiche Länge haben.

8. Einlasssystem nach einem der vorhergehenden Ansprüche, wobei alle Sekundärrohre (20, 22) im Wesentlichen gleiche größte Querschnittsflächen haben.

9. Einlasssystem (10) nach einem der vorhergehenden Ansprüche, wobei jedes Sekundärrohr (20, 22) ein zweites Ende (66, 68) entfernt von der jeweiligen Primärkammer (24, 26) hat und jedes zweite Ende (66, 68) dazu ausgelegt ist, einen Schenkel einer Y-Verbindung (31) zu bilden.

10. Einlasssystem (10) nach einem der vorhergehenden Ansprüche, wobei jedes Sekundärrohr (20, 22) ein zweites Ende (66, 68) entfernt von der jeweiligen Primärkammer (24, 26) besitzt und jedes zweite Ende (66, 68) mit einer Sekundärsammelkammer (70) verbunden ist, wobei die Sekundärsammelkammer (70) allen Sekundärrohren (20, 22) gemeinsam ist.

11. Einlasssystem nach einem der vorhergehenden Ansprüche, wobei die Primärkammern (24, 26) eine einheitliche Komponente sind und intern durch wenigstens eine Wand (72) getrennt sind, wobei die wenigstens eine Wand (72) mit dem ersten Fluidkommunizierungsmittel (48) versehen ist.

12. Einlasssystem (10) nach einem der Ansprüche 1 bis 10, wobei wenigstens eine der Primärkammern (24) eine getrennte Komponente ist, die mit wenigstens einer der anderen Kammern (26) durch eine erste Verbindung verbunden ist, die mit dem ersten Fluidkommunizierungsmittel (48) versehen ist.

13. Einlasssystem (10) nach einem der vorhergehenden Ansprüche, wobei die Sekundärrohre (20, 22) eine einheitliche Komponente sind und intern durch wenigstens eine Wand (74) getrennt sind, wobei die wenigstens eine Wand (74) mit dem zweiten Fluidkommunizierungsmittel (54) versehen ist.

14. Einlasssystem (10) nach einem der Ansprüche 1 bis 12, wobei wenigstens eines der Sekundärrohre (20) eine getrennte Komponente ist, die mit wenigstens einem der anderen Sekundärrohre (22) durch eine zweite Verbindung (78) verbunden ist, die mit dem zweiten Fluidkommunizierungsmittel (54) versehen ist.

15. Brennkraftmaschine (12), die ein Einlasssystem (10) nach einem der vorhergehenden Ansprüche umfasst.

16. Fahrzeug (80), das eine Brennkraftmaschine (12) nach Anspruch 15 enthält.

17. Verfahren zum Versorgen einer Brennkraftmaschine (12), die mehrere Zylinder (14) und mehrere mögliche Drehzahlen besitzt, mit einem Fluid, das entweder Luft oder ein Gemisch aus Kraftstoff und Luft enthält, wobei das Verfahren die folgenden Schritte umfasst:
- Befördern des Fluids durch ein Einlasssystem (10), das wenigstens zwei Einlassabschnitte (16, 18) umfasst, wovon jeder ein Sekundärrohr (20, 22) enthält, das mit einer Primärkammer (24, 26) verbunden ist, wobei eine größte Querschnittsfläche der Primärkammer (24, 26) wesentlich größer als eine durchschnittliche Querschnittsfläche des zugeordneten Sekundärrohrs (20, 22) ist, zu den Zylindern (14) der Maschine (12),
- Zulassen, dass das Fluid durch ein erstes Fluidkommunizierungsmittel (48) strömt, das wenigstens zwei der Primärkammern (24, 26) verbindet; und
- Zulassen, dass das Fluid unabhängig von der Drehzahl der Brennkraftmaschine (12) durch das erste Fluidkommunizierungsmittel (48) strömt,
**gekennzeichnet durch**
- Zulassen, dass das Fluid **durch** ein zweites Fluidkommunizierungsmittel (54) strömt, das wenigstens zwei der Sekundärrohre (20, 22) verbindet, und
- Zulassen, dass das Fluid unabhängig von der Drehzahl der Brennkraftmaschine (12) **durch** das zweite Fluidkommunizierungsmittel (54) strömt.

18. Verfahren nach Anspruch 17, wobei
- das erste Kommunizierungsmittel (48) unabhängig von der Drehzahl der Brennkraftmaschine (12) eine im Wesentlichen konstante Querschnittsfläche hat.

19. Verfahren nach Anspruch 18, wobei
- die Querschnittsfläche des ersten Kommunizierungsmittels (48) in einem Bereich von 0,1 bis 50 %, vorzugsweise von 1 bis 25 % und stärker bevorzugt von 4 bis 16 % einer größten Querschnittsfläche der Primärkammern (24, 26), die fluidisch kommunizieren, liegt.

20. Verfahren nach Anspruch 17, wobei:
- das zweite Fluidkommunizierungsmittel (54) unabhängig von der Drehzahl der Brennkraftmaschine (12) eine im Wesentlichen konstante Querschnittsfläche hat.

21. Verfahren nach Anspruch 20, wobei
- das zweite Fluidkommunizierungsmittel (54) in einem Bereich von 0,1 bis 50 %, vorzugsweise von 0,2 bis 25 % und stärker bevorzugt von 1 bis 10 % einer größten Querschnittsfläche der Sekundärrohre (20, 22), die fluidisch kommunizieren, liegt.

## Revendications

1. Système (10) d'admission pour un moteur (12) à combustion interne ayant une pluralité de cylindres (14), ledit système comprenant une pluralité de portions d'admission (16, 18), dans lequel chaque portion d'admission (16, 18) comprend un tuyau secondaire associé (20, 22) raccordé à une chambre primaire associée (24, 26), dans lequel une aire de section transversale la plus grande de la chambre primaire (24, 26) est sensiblement supérieure à une aire de section transversale moyenne du tuyau secondaire associé (20, 22), ladite chambre primaire (24, 26) étant raccordée à au moins un tuyau primaire (28, 30) agencé pour communiquer avec au moins un de ladite pluralité de cylindres (14), dans lequel au moins deux desdites portions d'admission (16, 18) sont en communication fluidique par l'intermédiaire d'un premier moyen (48) de communication fluidique comprenant au moins un premier passage, ledit premier moyen (48) de communication fluidique s'étendant entre les chambres primaires (24, 26) respectives, et dans lequel ledit premier moyen (48) de communication fluidique est un moyen de communication fluidique passif permanent,
**caractérisé en ce qu'**au moins deux desdites portions d'admission (16, 18) sont en communication fluidique par l'intermédiaire d'un deuxième moyen (54) de communication fluidique comprenant au moins un deuxième passage, ledit deuxième moyen (54) de communication fluidique s'étendant entre les tuyaux secondaires (20, 22) respectifs, dans lequel ledit deuxième moyen (54) de communication fluidique est un moyen de communication fluidique passif permanent.

2. Système (10) d'admission selon la revendication 1, dans lequel une aire de section transversale la plus petite dudit premier moyen (48) de communication fluidique est dans une plage de 0,1 à 50%, préférablement de 1 à 25%, plus préférablement de 4 à 16%, d'une aire de section transversale la plus grande des chambres primaires (24, 26) en communication fluidique.

3. Système (10) d'admission selon l'une quelconque des revendications précédentes, dans lequel une longueur dudit tuyau secondaire (20) d'une portion d'admission (16) en communication fluidique avec une autre portion d'admission (18) est dans une plage de 50 à 200%, préférablement de 50 à 150%, plus préférablement de 70 à 130%, du plus court du au moins un tuyau primaire (28) de ladite portion d'admission (16).

4. Système (10) d'admission selon l'une quelconque des revendications précédentes, dans lequel une aire de section transversale la plus petite dudit deuxième moyen (54) de communication fluidique est dans une plage de 0,01 à 50%, préférablement de 0,2 à 25%, plus préférablement de 1 à 10%, d'une aire de section transversale la plus grande des tuyaux secondaires (20, 22) en communication fluidique.

5. Système (10) d'admission selon la revendication 4, dans lequel chaque dit tuyau secondaire (20, 22) a une première extrémité (58, 60) associée avec la chambre primaire (24, 26) respective et ledit deuxième moyen (54) de communication fluidique est situé à des distances de communication fluidique (62, 64) à partir de la première extrémité (58, 60) de chaque tuyau secondaire (20, 22), associé avec ledit deuxième moyen (54) de communication fluidique, dans lequel chaque distance de communication fluidique (62, 64) est 10 à 90%, préférablement 20 à 80%, plus préférablement 30 à 60%, de la longueur du tuyau secondaire (20, 22) correspondant.

6. Système (10) d'admission selon la revendication 5, dans lequel toutes les distances de communication fluidique (62, 64) sont sensiblement égales.

7. Système (10) d'admission selon l'une quelconque des revendications précédentes, dans lequel tous les tuyaux secondaires (20, 22) ont une longueur sensiblement égale.

8. Système (10) d'admission selon l'une quelconque des revendications précédentes, dans lequel tous les tuyaux secondaires (20, 22) ont des aires de section transversale la plus grande sensiblement égale.

9. Système (10) d'admission selon l'une quelconque des revendications précédentes, dans lequel chaque dit tuyau secondaire (20, 22) a une deuxième extrémité (66, 68) distante de la chambre primaire (24, 26) respective et chaque deuxième extrémité (66, 68) est agencée pour former une branche d'une connexion en Y (31).

10. Système (10) d'admission selon l'une quelconque des revendications précédentes, dans lequel chaque dit tuyau secondaire (20, 22) a une deuxième extrémité (66, 68) distante de la chambre primaire (24, 26) respective et chaque deuxième extrémité (66, 68) est raccordée à un plenum secondaire (70), ledit plenum secondaire (70) étant commun pour tous les tuyaux secondaires (20, 22).

11. Système (10) d'admission selon l'une quelconque des revendications précédentes, dans lequel lesdites chambres primaires (24, 26) sont un composant unitaire, séparé intérieurement par au moins une paroi (72), ladite au moins une paroi (72) étant prévue avec ledit premier moyen (48) de communication fluidique.

12. Système (10) d'admission selon l'une quelconque des revendications 1 à 10, dans lequel au moins une desdites chambres primaires (24) est un composant séparé, raccordé à au moins l'une desdites autres chambres (26) par un premier raccord prévu avec ledit premier moyen (48) de communication fluidique.

13. Système (10) d'admission selon l'une quelconque des revendications précédentes, dans lequel lesdits tuyaux secondaires (20, 22) sont un composant unitaire, séparé intérieurement par au moins une paroi (74), ladite au moins une paroi (74) étant prévue avec ledit deuxième moyen (54) de communication fluidique.

14. Système (10) d'admission selon l'une quelconque des revendications 1 à 12, dans lequel au moins un desdits tuyaux secondaires (20) est un composant séparé, raccordé à au moins l'un desdits autres tuyaux secondaires (22) par un deuxième raccord (78) prévu avec ledit deuxième moyen (54) de communication fluidique.

15. Moteur (12) à combustion interne comprenant un système (10) d'admission selon l'une quelconque des revendications précédentes.

16. Véhicule (80) comprenant un moteur (12) à combustion interne selon la revendication 15.

17. Procédé d'alimentation d'un moteur (12) à combustion interne, ayant une pluralité de cylindres (14) et une pluralité de régimes moteur possibles, avec un fluide comprenant soit de l'air, soit un mélange de carburant et d'air, ledit procédé comprenant les étapes de :
- transporter ledit fluide à travers un système d'admission (10) comprenant au moins deux portions d'admission (16, 18), comprenant chacune un tuyau secondaire (20, 22) raccordé à une chambre primaire (24, 26), dans lequel une aire de section transversale la plus grande de la chambre primaire (24, 26) est sensiblement supérieure à une aire de section transversale moyenne du tuyau secondaire associé (20, 22), vers les cylindres (14) dudit moteur (12),
- permettre que ledit fluide s'écoule à travers un premier moyen (48) de communication fluidique, raccordant au moins deux desdites chambres primaires (24, 26) et
- permettre que ledit fluide s'écoule à travers ledit premier moyen (48) de communication fluidique quel que soit ledit régime moteur dudit moteur (12) à combustion interne (12) ;
**caractérisé par**
- permettre que ledit fluide s'écoule à travers un deuxième moyen (54) de communication fluidique, raccordant au moins deux desdits tuyaux secondaires (20, 22), et
- permettre que ledit fluide s'écoule à travers ledit deuxième moyen (54) de communication fluidique quel que soit ledit régime moteur dudit moteur (12) à combustion interne.

18. Procédé selon la revendication 17 dans lequel
- ledit premier moyen (48) de communication fluidique a une aire de section transversale sensiblement constante quel que soit ledit régime moteur dudit moteur (12) à combustion interne.

19. Procédé selon la revendication 18 dans lequel
- l'aire de section transversale dudit premier moyen (48) de communication est dans une plage de 0,1 à 50%, préférablement de 1 à 25%, plus préférablement de 4 à 16%, d'une aire de section transversale la plus grande des chambres primaires (24, 26) en communication fluidique.

20. Procédé selon la revendication 17 dans lequel
- ledit deuxième moyen (54) de communication fluidique a une aire de section transversale sensiblement constante quel que soit ledit régime moteur dudit moteur (12) à combustion interne.

21. Procédé selon la revendication 20 dans lequel
- ledit deuxième moyen (54) de communication fluidique est dans une plage de 0,1 à 50%, préférablement de 0,2 à 25%, plus préférablement de 1 à 10%, d'une aire de section transversale la plus grande des tuyaux secondaires (20, 22) en communication fluidique.
